(19) Europäisches Patentamt
European Patent Office
Office européen des brevets

(11) **EP 4 112 164 A1**

(12) **EUROPEAN PATENT APPLICATION**
published in accordance with Art. 153(4) EPC

(43) Date of publication:
**04.01.2023 Bulletin 2023/01**

(21) Application number: **21761448.6**

(22) Date of filing: **26.02.2021**

(51) International Patent Classification (IPC):
**B01J 23/78** (2006.01)    **B01J 23/46** (2006.01)
**B01J 23/58** (2006.01)    **C01B 3/04** (2006.01)

(52) Cooperative Patent Classification (CPC):
**B01J 23/46; B01J 23/58; B01J 23/78; C01B 3/04;**
Y02E 60/36

(86) International application number:
**PCT/JP2021/007470**

(87) International publication number:
**WO 2021/172545 (02.09.2021 Gazette 2021/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.02.2020 JP 2020033201**

(71) Applicant: **JFE Mineral Company, Ltd.
Tokyo 105-0014 (JP)**

(72) Inventors:
• **KONNAI Hidefumi
Tokyo 105-0014 (JP)**
• **TAKEI Takahiro
Kofu-shi, Yamanashi 400-8510 (JP)**

(74) Representative: **Grünecker Patent- und
Rechtsanwälte
PartG mbB
Leopoldstraße 4
80802 München (DE)**

(54) **COMPOSITE**

(57)    Provided is a composite body having excellent catalytic activity in a reaction such as an ammonia decomposition reaction. The composite body includes halloysite powder including a granule in which halloysite including a halloysite nanotube is aggregated, and a transition metal catalyst carried in the halloysite powder. The granule preferably includes a first pore derived from a tube hole of the halloysite nanotube, and a second pore different from the first pore. The transition metal catalyst preferably includes at least one element selected from the group consisting of iron, ruthenium, cobalt, nickel and silver.

FIG. 1

COMPARATIVE EXAMPLE 1

**Description**

TECHNICAL FIELD

The present invention relates to a composite body.

BACKGROUND ART

Patent Literature 1 discloses technology using, as a catalyst in an ammonia decomposition reaction, a composite body comprising a carrier such as magnesia, and a transition metal catalyst containing ruthenium or the like carried in the carrier.

CITATION LIST

PATENT LITERATURE

Patent Literature 1: WO 2017/099149

SUMMARY OF INVENTION

TECHNICAL PROBLEMS

Conventional composite bodies had insufficient catalytic activity in a reaction such as an ammonia decomposition reaction in some cases.

Hence, the present invention has an object to provide a composite body having excellent catalytic activity in a reaction such as an ammonia decomposition reaction.

SOLUTION TO PROBLEMS

The present inventors have made an intensive study to achieve the above-described object and found that a composite body using a specific carrier exhibits excellent catalytic activity. The present invention has been thus completed.

Specifically, the present invention provides the following [1] to [7].

[1] A composite body comprising halloysite powder including a granule in which halloysite including a halloysite nanotube is aggregated, and
a transition metal catalyst carried in the halloysite powder.
[2] The composite body according to [1], wherein the granule includes a first pore derived from a tube hole of the halloysite nanotube, and a second pore different from the first pore.
[3] The composite body according to [1] or [2], wherein the transition metal catalyst includes at least one element selected from the group consisting of iron, ruthenium, cobalt, nickel and silver.
[4] The composite body according to any one of [1] to [3], wherein a content of a transition metal element in the transition metal catalyst is not less than 0.5 mol% in terms of oxide based on a total amount of the composite body.
[5] The composite body according to any one of [1] to [4], further comprising at least one promoter that is selected from the group consisting of an alkali metal catalyst and an alkaline-earth metal catalyst and that is carried in the halloysite powder.
[6] The composite body according to [5], wherein the promoter includes at least one element selected from the group consisting of sodium, magnesium, and potassium.
[7] The composite body according to [5] or [6], wherein a content of at least one element included in the promoter and selected from the group consisting of an alkali metal element and an alkaline-earth metal element is not less than 0.1 mol% in terms of oxide based on a total amount of the composite body.

ADVANTAGEOUS EFFECTS OF INVENTION

The present invention can provide a composite body having excellent catalytic activity in a reaction such as an ammonia decomposition reaction.

BRIEF DESCRIPTION OF DRAWINGS

[FIG. 1] FIG. 1 shows the XRD pattern of a composite body (halloysite powder 1) of Comparative Example 1.
[FIG. 2] FIG. 2 shows the XRD pattern of a composite body of Example 4.
[FIG. 3] FIG. 3 is an SEM image showing a granule of the composite body (halloysite powder 1) of Comparative Example 1.
[FIG. 4] FIG. 4 is an SEM image showing a granule of the composite body of Example 4.
[FIG. 5] FIG. 5 is a TEM image showing part of the composite body of Example 4.
[FIG. 6] FIG. 6 is a graph showing the differential pore distribution of the composite body of Example 4 determined from the nitrogen adsorption isotherm by the BJH method.
[FIG. 7] FIG. 7 is a schematic view showing a reaction apparatus.

DESCRIPTION OF EMBODIMENTS

Hereinafter, the numerical ranges indicated using "(from)... to..." include the former number as the lower limit value and the latter number as the upper limit value.

[Composite body]

The composite body of the invention is a composite body comprising halloysite powder including a granule in which halloysite including a halloysite nanotube is aggregated, and a transition metal catalyst carried in the halloysite powder.

The halloysite powder (hereinafter, also referred to as "halloysite powder of the invention" for convenience) in the composite body of the invention functions as a so-called catalyst carrier.

In the halloysite powder of the invention, as described later, the granule preferably includes a first pore derived from a tube hole of the halloysite nanotube, and a second pore different from the first pore. The second pore is assumed as being derived from a gap between halloysite aggregates.

Presumably, since the transition metal catalyst is carried on the surface of the above-described halloysite powder of the invention (in particular, on the surface of the first pore and/or the surface of the second pore), the inside of the first pore or the second pore is utilized as a reaction field, resulting in excellent catalytic activity (specifically, catalytic activity in an ammonia decomposition reaction).

It is also presumed that the halloysite powder of the invention functions not only as the catalyst carrier but also as a solid acid catalyst having a specific nano space, effectively assisting the catalytic activity.

<Transition metal catalyst>

The transition metal catalyst contains a transition metal element.

While depending on the catalytic reaction to which the composite body of the invention is adopted, suitable examples of the transition metal element include: Group 8 elements such as iron (Fe) and ruthenium (Ru); Group 9 elements such as cobalt (Co), rhodium (Rh), and iridium (Ir); Group 10 elements such as nickel (Ni); and Group 11 elements such as copper (Cu), silver (Ag), and gold (Au), because the catalytic activity in an ammonia decomposition reaction is excellent.

Among these, at least one element selected from the group consisting of iron (Fe), ruthenium (Ru), cobalt (Co), nickel (Ni), and silver (Ag) is more preferable, because the catalytic activity in an ammonia decomposition reaction is more excellent.

Because the catalytic activity is more excellent, in the composite body of the invention, a content of the transition metal element in the transition metal catalyst in terms of oxide is preferably not less than 0.5 mol%, more preferably not less than 1.5 mol%, and further preferably not less than 2.5 mol%, based on a total amount of the composite body of the invention.

Meanwhile, the upper limit thereof is not particularly limited and is, for example, preferably not more than 10.0 mol%, more preferably not more than 8.0 mol%, and further preferably not more than 5.0 mol%.

Here, a content of the transition metal element "in terms of oxide" specifically means a content "in terms of $Fe_2O_3$" when the transition metal element is "Fe," a content "in terms of $RuO_2$" when the transition metal element is "Ru," a content "in terms of $Co_2O_3$" when the transition metal element is "Co," a content "in terms of NiO" when the transition metal element is "Ni", and a content "in terms of $Ag_2O$" when the transition metal element is "Ag."

A content of the transition metal element (in terms of oxide) is determined through X-ray fluorescence (XRF) analysis. A content of the transition metal element (in terms of oxide) is a 100%-normalized value excluding an ignition loss. The specific conditions in the XRF analysis are as follows.

- Instrument: ZSX Primus II (available from Rigaku Corporation)
- Pretreatment method: powder measurement method using an exclusive powder container and a polypropylene membrane
- Quantification method: quantitative analysis through FP method-SQX analysis and calibration curve method using certified standard substance (gairome clay, kaoline, pottery stone) of The Ceramic Society of Japan

The form of the transition metal catalyst carried in the halloysite powder of the invention is not particularly limited.
For instance, the transition metal catalyst may be carried in the halloysite powder of the invention in the form of metal (metal simple substance) or may be carried in the halloysite powder of the invention in the form of a compound such as an oxide or a chloride.

<Promoter>

It is preferable that the composite body of the invention further includes a promoter (at least one catalyst selected from the group consisting of an alkali metal catalyst and an alkaline-earth metal catalyst) carried in the halloysite powder of the invention. With this constitution, the catalytic activity in, for example, an ammonia decomposition reaction is more excellent.
The alkali metal catalyst includes an alkali metal element such as lithium (Li), sodium (Na), potassium (K), rubidium (Rb), or cesium (Cs).
The alkaline-earth metal catalyst includes an alkaline-earth metal element such as magnesium (Mg), calcium (Ca), strontium (Sr), or barium (Ba).
In other words, the promoter contains at least one element (also referred to as "promoter element" for convenience) selected from the group consisting of alkali metal elements and alkaline-earth metal elements.
The promoter preferably contains at least one element selected from the group consisting of sodium (Na), magnesium (Mg), and potassium (K) as the promoter element, because the catalytic activity in an ammonia decomposition reaction is further excellent.
In the composite body of the invention, a content of the promoter element included in the promoter in terms of oxide is preferably not less than 0.1 mol%, more preferably not less than 0.2 mol%, and further preferably not less than 0.3 mol%, based on a total amount of the composite body of the invention.
Meanwhile, the upper limit thereof is not particularly limited and is, for example, preferably not more than 2.0 mol%, more preferably not more than 1.5 mol%, and further preferably not more than 1.0 mol%.
Here, a content of the promoter element "in terms of oxide" specifically means a content "in terms of $Na_2O$" when the promoter element is "Na," a content "in terms of MgO" when the promoter element is "Mg," and a content "in terms of $K_2O$" when the promoter element is "K."
A content of the promoter element (in terms of oxide) is determined through the XRF analysis as with a content of the transition metal element (in terms of oxide) described above.
The form of the promoter carried in the halloysite powder of the invention is not particularly limited.
For instance, the promoter may be carried in the halloysite powder of the invention in the form of metal (metal simple substance) or may be carried in the halloysite powder of the invention in the form of a compound such as an oxide or a chloride.

<Halloysite powder>

Next, the halloysite powder of the invention is described.
The halloysite powder of the invention is powder including a granule in which halloysite including a halloysite nanotube is aggregated.
In the present specification, an aggregate of a plurality of "granules" is referred to as "powder."
In the halloysite powder of the present invention, the granule preferably includes a first pore derived from a tube hole of the halloysite nanotube, and a second pore different from the first pore.
Halloysite is a clay mineral represented by $Al_2Si_2O_5(OH)_4 \cdot 2H_2O$, or $Al_2Si_2O_5(OH)_4$.
Halloysite assumes various shapes such as a tubular shape (hollow tubular shape), a spherical shape, an angular lump shape, a plate-like shape, and a sheet-like shape.
The inner diameter of a halloysite nanotube (the diameter of a tube hole), which halloysite nanotube is a tube-shaped (hollow tube-shaped) halloysite, is approximately from 10 to 20 nm, for example. The outer surface of the halloysite nanotube is mainly composed of silicate ($SiO_2$), and the inner surface of the halloysite nanotube is mainly

composed of alumina ($Al_2O_3$).

In the specification, "halloysite" includes "metahalloysite."

"Metahalloysite" is dehydrated halloysite, i.e., halloysite represented by $Al_2Si_2O_5(OH)_4$ from which OH is removed to assume a low-crystalline form, and is a term that has been conventionally, generally or idiomatically used to refer to a variant of halloysite.

In the specification, "metahalloysite" is defined as "a product obtained by firing halloysite at a specific firing temperature." The "specific firing temperature" is, for example, not lower than 500°C, and preferably not lower than 600°C.

The upper limit of the "specific firing temperature" is not particularly limited and is, for example, not higher than 1,000°C. Within the foregoing temperature range, the shape of halloysite nanotube (tubular shape) does not change.

A suitable example of the halloysite powder of the invention is halloysite powder described in paragraphs [0031] to [0057] in WO2018/079556. The differential pore distribution determined from a nitrogen adsorption isotherm by the BJH method preferably exhibits two or more pore size peaks in a range of not less than 10 nm.

A method of producing the halloysite powder of the invention (hereinafter, also referred to as "halloysite powder production method of the invention") is described.

The halloysite powder production method of the invention is, for example, a method including a step of preparing a slurry of halloysite including halloysite nanotubes (slurry preparation step), and a step of preparing powder from the slurry (powder preparation step). The method may further include a step (firing step) of firing the powder obtained in the powder preparation step.

Examples of the powder preparation step include a step of spray-drying the slurry prepared in the slurry preparation step to obtain powder. The method of preparing powder from the slurry is not limited to the spray-drying described above, and, for example, media fluidized drying (drying using a fluidized bed including balls) may be employed.

The foregoing halloysite powder production method of the invention is suitably exemplified by a method described in paragraphs [0011] to [0030] in WO2018/079556.

[Method of producing composite body]

Next, a method of producing the composite body of the invention (hereinafter, also referred to as "composite body production method of the invention") is described.

<Step A>

First, the composite body production method of the invention optionally includes a step (Step A) of causing the halloysite powder of the invention to carry the promoter.

In other words, when the composite body of the invention includes the promoter, Step A is carried out.

In Step A, a salt of the promoter element (at least one element selected from the group consisting of alkali metal elements and alkaline-earth metal elements) included in the promoter is dissolved in water such as distilled water, whereby an aqueous solution A is obtained. The aqueous solution A contains ions of the promoter element.

Examples of the salt of the promoter element include, for example, a chloride, a carbonate, a nitrate, and a sulfate of the promoter element, and among these, a sulfate is preferred. The salt may be a hydrate.

Next, the halloysite powder of the invention is added to the aqueous solution A. As a result, obtained is a dispersion A in which the halloysite powder of the invention is dispersed in the aqueous solution A. In this process, an amount of the aqueous solution A is preferably 10 to 1,000 mL with respect to 1 g of the halloysite powder of the invention.

In the dispersion A, an amount-of-substance ratio between an amount of substance of Al in halloysite ($Al_2Si_2O_5(OH)_4$) and an electric charge of the promoter element (amount of substance of Al in halloysite/electric charge of promoter element) is preferably 1/1 to 1/5.

Hypothetically, a case where the amount-of-substance ratio is 1/3 (2/6) is discussed. In this case, when the promoter element is, for example, sodium (Na), the promoter element, i.e., Na, has an amount of substance of 6 moles (with sodium being Na+, hence 6 moles) with respect to 2 moles of Al (in halloysite).

Next, the dispersion A is subjected to shaking using a commercial shaking apparatus or the like.

The shaking temperature is preferably not lower than 20°C, and more preferably not lower than 30°C. Meanwhile, the shaking temperature is preferably not higher than 60°C, and more preferably not higher than 50°C.

The shaking time is preferably not less than 12 hours, and more preferably not less than 18 hours. Meanwhile, the shaking time is preferably not more than 36 hours, and more preferably not more than 30 hours.

The shaking speed is preferably not lower than 50 rpm, and more preferably not lower than 100 rpm. Meanwhile, the shaking speed is preferably not higher than 400 rpm, and more preferably not higher than 300 rpm.

Next, the dispersion A having been shaken is filtrated, and a solid A is collected. The filtration method and the collection method are not particularly limited, and any conventionally known methods may be used.

The collected solid A is dried.

The drying conditions are not particularly limited as long as moisture in the solid A is sufficiently removed, and, for example, the drying temperature is preferably not lower than 30°C, and more preferably not lower than 40°C. Meanwhile, the temperature is preferably not higher than 70°C, and more preferably not higher than 60°C.

The drying time is preferably not less than 6 hours, and more preferably not less than 10 hours. Meanwhile, the drying time is preferably not more than 24 hours, and more preferably not more than 20 hours.

By drying the solid A in this manner, a sample A is obtained. In the sample A, the promoter is carried in the halloysite powder of the invention.

As described above, in the sample A, the promoter may be carried in the halloysite powder of the invention in the form of metal (metal simple substance) or may be carried in the halloysite powder of the invention in the form of a compound such as an oxide or a chloride.

<Step B>

The composite body production method of the invention includes a step (Step B) of causing a carrier S to carry the transition metal catalyst. The carrier S is the halloysite powder of the invention and/or the sample A obtained in Step A.

In Step B, a salt of the transition metal element included in the transition metal catalyst is dissolved in water such as distilled water, whereby an aqueous solution B is obtained. The aqueous solution B contains ions of the transition metal element.

Examples of the salt of the transition metal element include, for example, a chloride, a carbonate, a nitrate, and a sulfate of the transition metal element, and among these, a chloride is preferred. The salt may be a hydrate.

Next, the carrier S is added to the aqueous solution B. As a result, obtained is a dispersion B in which the carrier S is dispersed in the aqueous solution B. In this process, an amount of the aqueous solution B is preferably 10 to 1,000 mL with respect to 1 g of the carrier S.

In the dispersion B, an amount-of-substance ratio between an amount of substance of Al in halloysite ($Al_2Si_2O_5(OH)_4$) and an electric charge of the transition metal element (amount of substance of Al in halloysite/electric charge of transition metal element) is preferably 1/1 to 1/5.

Hypothetically, a case where the amount-of-substance ratio is 1/3 (2/6) is discussed. In this case, when the transition metal element is, for example, nickel (Ni), the transition metal element, i.e., Ni, has an amount of substance of 3 moles (with nickel being $Ni^{2+}$, hence 3 moles) with respect to 2 moles of Al (in halloysite).

Next, the dispersion B is subjected to shaking using a commercial shaking apparatus or the like.

The conditions (including shaking temperature, shaking time, and shaking speed) for shaking the dispersion B have the same preferable ranges as those for shaking the dispersion A described above.

Next, the dispersion B having been shaken is filtrated, and a solid B is collected. The filtration method and the collection method are not particularly limited, and any conventionally known methods may be used.

The collected solid B is dried.

The conditions (including drying temperature, and drying time) for drying the solid B have the same preferable ranges as those for drying the solid A described above.

By drying the solid B in this manner, a sample B is obtained. In the sample B, the transition metal catalyst is carried in the halloysite powder of the invention.

As described above, in the sample B, the transition metal catalyst may be carried in the halloysite powder of the invention in the form of metal (metal simple substance) or may be carried in the halloysite powder of the invention in the form of a compound such as an oxide or a chloride.

When the sample A is used as the carrier S in Step B, the promoter is also carried in the halloysite powder of the invention in the sample B thus obtained.

[EXAMPLES]

The invention is specifically described below with reference to Examples. However, the present invention is not limited thereto.

<Preparation of halloysite powder>

Halloysite powder 1 (corresponding to the "halloysite powder" described above) to be used in each of Examples was produced. Specifically, in accordance with Example 7 described in [EXAMPLES] (paragraphs [0059] to [0087]) of WO2018/079556, a slurry containing halloysite nanotubes was spray-dried, whereby powder was obtained.

Meanwhile, the powder having been spray-dried was fired at firing temperature of 450°C. Specifically, the powder having been spray-dried was heated by an electric furnace utilizing Siliconit heating elements, in which the temperature was increased from room temperature at a temperature increase rate of 5°C/min. and maintained at 450°C for 1 hour, and thereafter the powder was cooled in the furnace. When the temperature was increased and maintained at the firing temperature, in order to promote burning off of the surfactant, ventilation was performed while a certain amount of air was supplied into the furnace.

Hereinbelow, the halloysite powder 1 may be described as "Hs1" for convenience.

<Preparation of composite body>

In accordance with the procedure described below, the composite bodies of Examples 1 to 10 and Comparative Examples 1 to 2 were prepared.

<<Example 1: Na-Ni>>

As a salt of the promoter element, sodium nitrate ($NaNO_3$, guaranteed reagent, available from Kanto Chemical Co., Inc.) was dissolved in distilled water, whereby the aqueous solution A was obtained.

The halloysite powder 1 was added to the thus obtained aqueous solution A, whereby the dispersion A was obtained. In this process, an amount of the aqueous solution A was 500 mL with respect to 1 g of the halloysite powder 1. In the dispersion A, the amount-of-substance ratio between an amount of substance of Al in halloysite and an electric charge of the promoter element (Na in this case) (amount of substance of Al in halloysite/electric charge of promoter element) was 1/3.

The obtained dispersion A was subjected to shaking using a shaking apparatus (BR-23FH, available from TAITEC Corporation) under the conditions of 40°C, 24 hours, and 200 rpm, and thereafter filtrated, whereby the solid A was obtained. The solid A thus obtained was dried at 50°C for 12 hours, whereby the sample A was obtained.

Next, as a salt of the transition metal element, nickel (II) chloride hexahydrate ($NiCl_2 \cdot 6H_2O$, guaranteed reagent, available from Nakalai Tesque Inc.) was dissolved in distilled water, whereby the aqueous solution B was obtained.

The sample A was added to the thus obtained aqueous solution B, whereby the dispersion B was obtained. In this process, an amount of the aqueous solution B was 500 mL with respect to 1 g of the sample A. In the dispersion B, the amount-of-substance ratio between an amount of substance of Al in halloysite and an electric charge of the transition metal element (Ni in this case) (amount of substance of Al in halloysite/electric charge of transition metal element) was 1/3.

The obtained dispersion B was subjected to shaking using a shaking apparatus (BR-23FH, available from TAITEC Corporation) under the conditions of 40°C, 24 hours, and 200 rpm, and thereafter filtrated, whereby the solid B was obtained. The solid B thus obtained was dried at 50°C for 12 hours, whereby the sample B was obtained.

The obtained sample B was treated as the composite body of Example 1.

<<Example 2: Mg-Ni>>

As a salt of the promoter element, in place of sodium nitrate, magnesium nitrate hexahydrate ($Mg(NO_3)_2O \cdot 6H_2O$, guaranteed reagent, available from Kanto Chemical Co., Inc.) was used. Except for the above difference, the composite body of Example 2 was obtained in the same manner as in Example 1.

<<Example 3: K-Ni>>

As a salt of the promoter element, in place of sodium nitrate, potassium nitrate ($KNO_3$, guaranteed reagent, available from Kanto Chemical Co., Inc.) was used. Except for the above difference, the composite body of Example 3 was obtained in the same manner as in Example 1.

<<Example 4: Na-Ru>>

As a salt of the transition metal element, in place of nickel (II) chloride hexahydrate, ruthenium (III) chloride trihydrate ($RuCl_3 \cdot 3H_2O$, available from Kanto Chemical Co., Inc.) was used. Except for the above difference, the composite body of Example 4 was obtained in the same manner as in Example 1.

<<Example 5: Mg-Ru>>

As a salt of the promoter element, in place of sodium nitrate, magnesium nitrate hexahydrate ($Mg(NO_3)_2O \cdot 6H_2O$, guaranteed reagent, available from Kanto Chemical Co., Inc.) was used.

In addition, as a salt of the transition metal element, in place of nickel (II) chloride hexahydrate, ruthenium (III) chloride trihydrate ($RuCl_3 \cdot 3H_2O$, available from Kanto Chemical Co., Inc.) was used.

Except for the above difference, the composite body of Example 5 was obtained in the same manner as in Example 1.

<<Example 6: K-Ru>>

As a salt of the promoter element, in place of sodium nitrate, potassium nitrate ($KNO_3$, guaranteed reagent, available from Kanto Chemical Co., Inc.) was used.

In addition, as a salt of the transition metal element, in place of nickel (II) chloride hexahydrate, ruthenium (III) chloride trihydrate ($RuCl_3 \cdot 3H_2O$, available from Kanto Chemical Co., Inc.) was used.

Except for the above difference, the composite body of Example 6 was obtained in the same manner as in Example 1.

<<Example 7: Na-Fe>>

As a salt of the transition metal element, in place of nickel (II) chloride hexahydrate, iron (III) chloride hexahydrate ($FeCl_3 \cdot 6H_2O$, available from Kanto Chemical Co., Inc.) was used. Except for the above difference, the composite body of Example 7 was obtained in the same manner as in Example 1.

<<Example 8: Na-Co>>

As a salt of the transition metal element, in place of nickel (II) chloride hexahydrate, cobalt (II) chloride hexahydrate ($CoCl_2 \cdot 6H_2O$, available from Kanto Chemical Co., Inc.) was used. Except for the above difference, the composite body of Example 8 was obtained in the same manner as in Example 1.

<<Example 9: Na-Ag>>

As a salt of the transition metal element, in place of nickel (II) chloride hexahydrate, silver nitrate ($AgNO_3$, available from Kanto Chemical Co., Inc.) was used. Except for the above difference, the composite body of Example 9 was obtained in the same manner as in Example 1.

<<Example 10: Ru>>

The composite body of Example 10 was obtained in the same manner as in Examples 4 to 6 except that the promoter (Na, Mg or K) was not used but the transition metal catalyst (Ru) was only used.

Specifically, first, as a salt of the transition metal element, ruthenium (III) chloride trihydrate ($RuCl_3 \cdot 3H_2O$, available from Kanto Chemical Co., Inc.) was dissolved in distilled water, whereby the aqueous solution B was obtained.

The halloysite powder 1 was added to the thus obtained aqueous solution B, whereby the dispersion B was obtained. In this process, an amount of the aqueous solution B was 500 mL with respect to 1 g of the halloysite powder 1. In the dispersion B, the amount-of-substance ratio between an amount of substance of Al in halloysite and an electric charge of the transition metal element (ruthenium in this case) (amount of substance of Al in halloysite/electric charge of transition metal element) was 1/3.

The obtained dispersion B was subjected to shaking using a shaking apparatus (BR-23FH, available from TAITEC Corporation) under the conditions of 40°C, 24 hours, and 200 rpm, and thereafter filtrated, whereby the solid B was obtained. The solid B thus obtained was dried at 50°C for 12 hours, whereby the sample B was obtained.

The obtained sample B was treated as the composite body of Example 10.

<<Comparative Example 1>>

In Comparative Example 1, the halloysite powder 1 was used without carrying the transition metal catalyst and/or the promoter. This may be called as "composite body of Comparative Example 1" in some cases (although this is not actually a composite body).

<<Comparative Example 2>>

The composite body of Comparative Example 2 was obtained in the same manner as in Example 4 except that, in place of the halloysite powder 1, alumina (AKP-G07, available from SUMITOMO CHEMICAL COMPANY, LIMITED, BET surface area: 73.4 $m^2/g$) (sometimes referred to as "carrier X1" or simply as "X1" for convenience) was used.

<Content of transition metal element and promoter element>

In the composite body of each of Examples 1 to 10, contents (unit: mol%) of the transition metal element (for example, nickel in Example 1) and the promoter element (for example, sodium in Example 1) in terms of oxide based on a total amount of the composite body were determined through the XRF under the above-described conditions. The results are shown in Table 1 below.

[Table 1]

Table 1

| | Example | | | | | | | | | |
|---|---|---|---|---|---|---|---|---|---|---|
| | 1<br>Na -Ni | 2<br>Mg- Ni | 3<br>K-Ni | 4<br>Na-Ru | 5<br>Mg-Ru | 6<br>K-Ru | 7<br>Na-Fe | 8<br>Na-Co | 9<br>Na-Ag | 10<br>Ru |
| $Na_2O$ | 0.69 | | | 0.30 | | | 1.91 | 0.50 | 0.66 | |
| MgO | | 0.56 | | | 0.10 | | | | | |
| $K_2O$ | | | 0.32 | | | 0.11 | | | | |
| NiO | 4.07 | 1.72 | 3.09 | | | | | | | |
| $RuO_2$ | | | | 4.29 | 3.75 | 2.72 | | | | 4.54 |
| $Fe_2O_2$ | | | | | | | 7.63 | | | |
| $Co_2O_3$ | | | | | | | | 1.50 | | |
| $Ag_2O$ | | | | | | | | | 0.52 | |
| (Unit: mol%) | | | | | | | | | | |

<<Other physical properties>>

<<XRD>>

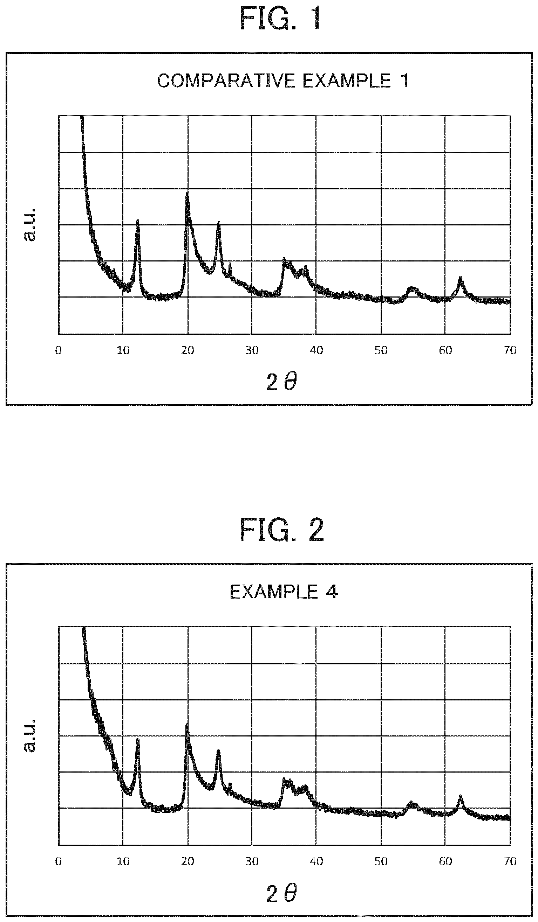

The composite body of each example was subjected to the X-ray diffraction (XRD) measurement. XRD patterns of the composite bodies of Comparative Example 1 and Example 4 are exemplified in FIG. 1 and FIG. 2, respectively.

FIG. 1 is an XRD pattern of the composite body (halloysite powder 1) of Comparative Example 1.
FIG. 2 is an XRD pattern of the composite body of Example 4.

As shown in FIGS. 1 and 2, regardless of whether the transition metal catalyst and the promoter are carried or not, there was no significant difference between the XRD patters. In either of the cases, the XRD pattern derived from halloysite represented by $Al_2Si_2O_5(OH)_4$ was observed. The same applied to the remaining examples.

<<SEM>>

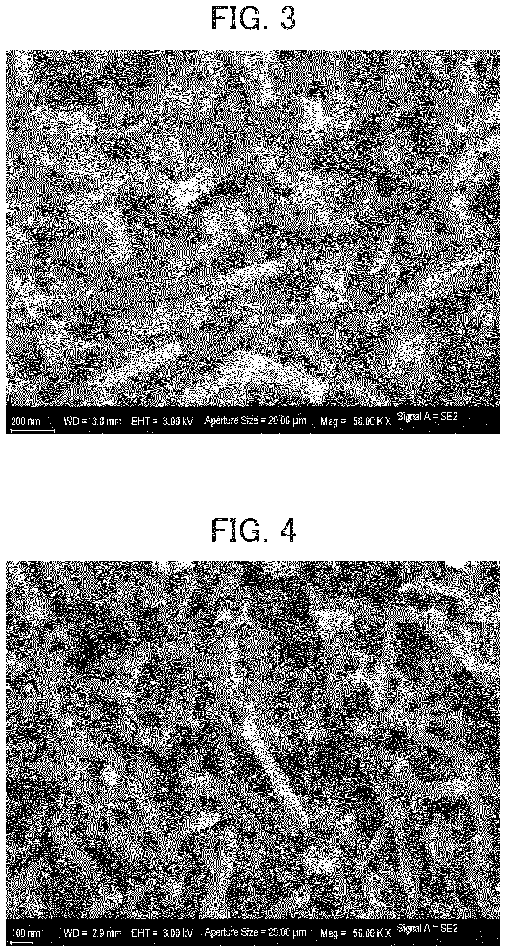

Of the composite body of each example, a scanning electron microscope (SEM) image was taken. SEM images of the composite bodies of Comparative Example 1 and Example 4 are exemplified in FIG. 3 and FIG. 4, respectively.
FIG. 3 is an SEM image showing a granule of the composite body (halloysite powder 1) of Comparative Example 1.
FIG. 4 is an SEM image showing a granule of the composite body of Example 4.
From the SEM images in FIGS. 3 and 4, it was confirmed that pores (first pores) derived from tube holes of halloysite nanotubes were present on a surface of the granule in which halloysite including halloysite nanotubes is aggregated. It was also confirmed that pores (second pores) with a larger size than that of the tube holes were present in a cross-section (not shown) of the granule. The same applied to the remaining examples.

<<TEM>>

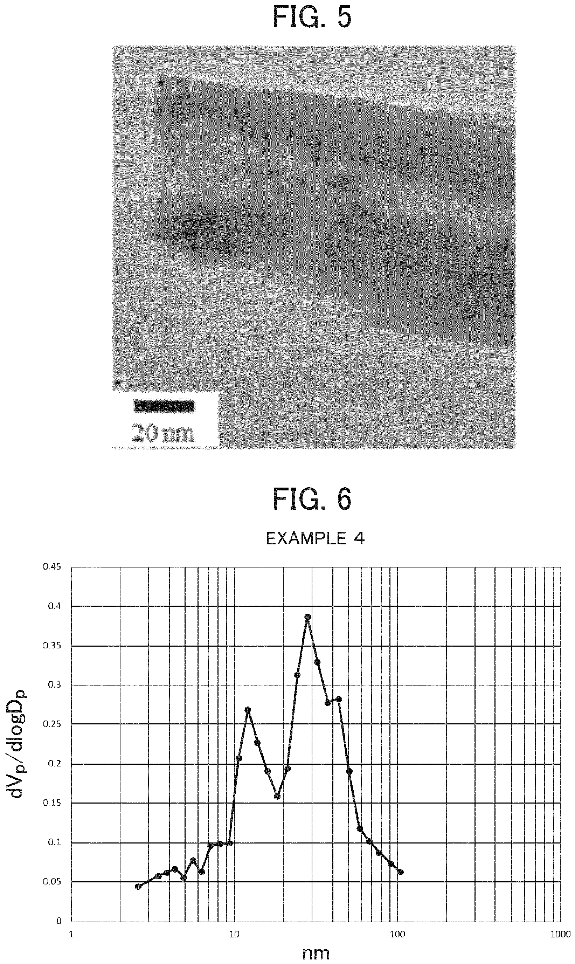

Of the composite body of each example, a transmission electron microscope (TEM) image was taken. A TEM image of the composite body of Example 4 is exemplified in FIG. 5.

FIG. 5 is a TEM image showing part of the composite body of Example 4.

From the TEM image in FIG. 5, it was confirmed that particulate ruthenium was carried on the inner and outer surfaces of the halloysite nanotube. Here, it is presumed that since elemental sodium is light, sodium did not appear in the TEM image.

<<Pore distribution and average particle size>>

The composite body of each example was subjected to the nitrogen adsorption-desorption isotherm measurement. The conditions described in paragraph [0048] in WO2018/079556 were adopted as the measurement conditions. A pore distribution of the composite body of Example 4 is exemplified in FIG. 6.

FIG. 6 is a graph showing the differential pore distribution of the composite body of Example 4 determined from the nitrogen adsorption isotherms by the BJH method. The horizontal axis represents pore size [nm], and the vertical axis represents differential pore volume (dVp/dlogDp) [$cm^3$/g]. From the graph in FIG. 6, it was confirmed that two or more pore size peaks were observed in the range of not less than 10 nm.

Along with the pore distribution measurement, the BET specific surface area of the composite body of each example was determined. In addition, the average particle size thereof was measured in accordance with the conditions described in paragraph [0049] in WO2018/079556. The results of Example 4 and Comparative Example 1 are exemplified in Table 2.

[Table 2]

**Table 2**

|  | Example 4 | Comparative Example 1 |
|---|---|---|
| BET specific surface area [$m^2$/g] | 132 | 70 |
| Average particle size [$\mu$m] | 21.1 | 28.3 |

<Evaluation of catalytic activity>

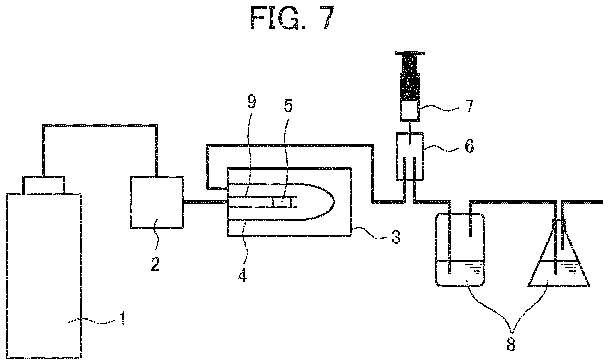

Each of the composite bodies of Examples 1 to 10 and Comparative Examples 1 to 2 was used as a sample and evaluated for catalytic activity in ammonia decomposition reaction. For the evaluation, a reaction apparatus shown in FIG. 7 was first assembled.

FIG. 7 is a schematic view showing a reaction apparatus.

A Tammann tube 4 made of quartz glass was disposed in an electric furnace 3, and a quartz glass tube 9 with an inner diameter of 8 mm was disposed in the Tammann tube 4. In the quartz glass tube 9, 0.03 g of a sample 5 and silica wool (not shown) for fixing the sample 5 were filled, and ammonia gas (Ar + $NH_3$, $NH_3$: 5.17 vol%, available from TAIYO NIPPON SANSO CORPORATION) was flown from a gas cylinder 1. The gas flow rate was set to 10 mL/min. using a gas flow controller 2. As the electric furnace 3 and the gas flow controller 2, "FT-01 VAC-30" available from FULL-TECH CORPORATION and "MULTIFUNCTIONAL CONTROL UNIT CU-2140" available from HORIBA STEC, Co. Ltd. were used, respectively.

Thereafter, the electric furnace 3 was heated at a temperature increase rate of 10°C/min. to each of set temperatures (varying from 200°C to 700°C at an interval of 50°C or 100°C). Once each of the set temperatures was achieved, the temperature was maintained for 10 minutes, and thereafter the gas which had passed through the Tammann tube 4 and had been introduced into a container 6 was taken out using a syringe 7. Part of the gas which was not taken out was passed through water 8 and then discharged to an outside.

The gas that was taken out using the syringe 7 was injected into a gas chromatography (GC) apparatus to be subjected to gas chromatography under the following conditions, whereby a conversion rate from ammonia to hydrogen (hereinafter, also simply called "conversion rate") at each of the set temperatures was determined.

The conversion rate was calculated from a quantitative value of an amount of hydrogen generated at each of the set temperatures, having a quantitative value of an amount of hydrogen generated when ammonia was fully decomposed as 100%. In other words, the conversion rate was calculated in accordance with the following equation.

$$\text{Conversion rate [\%] = (amount of hydrogen generated}$$
$$\text{at each set temperature/amount of hydrogen generated when}$$
$$\text{ammonia was fully decomposed) x 100}$$

It should be noted that with the quartz glass tube 9 being not filled with the sample 5, hydrogen generation was not observed until 700°C.

The results are shown in Table 3 below. In the space for a case where no measurement was made, "-" was placed.

- GC apparatus: GC-3200 (available from GL Sciences Inc.)
- Carrier gas: He (20 mL/min.)
- Detector: thermal conductivity detector (TCD)
- Column: Porapak T50/80 (available from GL Sciences Inc.)
- Column oven temperature: 120°C
- Injection temperature: 150°C
- TCD detection temperature: 120°C
- TCD current: 120 mA

[Table 3]

Table 3

| | Example | | | | | | | | | | Comparative Example | |
|---|---|---|---|---|---|---|---|---|---|---|---|---|
| | 1 | 2 | 3 | 4 | 5 | 6 | 7 | 8 | 9 | 10 | 1 | 2 |
| Catalyst | Na -Ni | Mg- Ni | K-Ni | Na-Ru | Mg-Ru | K-Ru | Na-Fe | Na-Co | Na-Ag | Ru | - | Na-Ru |
| Carrier | Hs1 | Hs1 | Hs1 | Hs1 | Hs1 | Hs1 | Hs1 | Hs1 | Hs1 | Hs1 | Hs1 | X1 |
| 400°C | 0 | 0 | 0 | 17 | 0 | 2 | 0 | 0 | 0 | 0 | 0 | 0 |
| 500°C | 16 | 0 | 0 | 86 | 82 | 80 | 0 | 0 | 0 | 66 | 0 | 17 |
| 600°C | 68 | 0 | 6 | 100 | 100 | 100 | 8 | 0 | 0 | 100 | 0 | 83 |
| 650°C | - | 43 | 65 | - | - | - | 78 | 21 | 16 | 100 | 4 | - |
| 700°C | 95 | 65 | 80 | 100 | 100 | 100 | 98 | 51 | 51 | 100 | 37 | - |

<Summary of Evaluation Results>

As shown in Table 3 above, the composite bodies of Examples 1 to 10 exhibited the higher catalytic activity in ammonia decomposition reaction than that of the composite body (halloysite powder 1 alone) of Comparative Example 1.

Comparing Example 4 and Comparative Example 2 both using the same catalyst, i.e., "Na-Ru," Example 4 using the halloysite powder 1 as the carrier exhibited more excellent catalytic activity than that of Comparative Example 2 using the carrier X1.

Comparing Examples 4 to 6 and 10 all using the same transition metal catalyst (Ru), Examples 4 to 6 using the promoter (Na, Mg or K) exhibited more excellent catalytic activity than that of Example 10 using no promoter.

REFERENCE SIGNS LIST

1: gas cylinder
2: gas flow controller
3: electric furnace
4: Tammann tube
5: sample
6: container
7: syringe
8: water
9: quartz glass tube

## Claims

1. A composite body comprising halloysite powder including a granule in which halloysite including a halloysite nanotube is aggregated, and
a transition metal catalyst carried in the halloysite powder.

2. The composite body according to claim 1, wherein the granule includes a first pore derived from a tube hole of the halloysite nanotube, and a second pore different from the first pore.

3. The composite body according to claim 1 or 2, wherein the transition metal catalyst includes at least one element selected from the group consisting of iron, ruthenium, cobalt, nickel and silver.

4. The composite body according to any one of claims 1 to 3, wherein a content of a transition metal element in the transition metal catalyst is not less than 0.5 mol% in terms of oxide based on a total amount of the composite body.

5. The composite body according to any one of claims 1 to 4, further comprising at least one promoter that is selected from the group consisting of an alkali metal catalyst and an alkaline-earth metal catalyst and that is carried in the halloysite powder.

6. The composite body according to claim 5, wherein the promoter includes at least one element selected from the group consisting of sodium, magnesium, and potassium.

7. The composite body according to claim 5 or 6, wherein a content of at least one element included in the promoter and selected from the group consisting of an alkali metal element and an alkaline-earth metal element is not less than 0.1 mol% in terms of oxide based on a total amount of the composite body.

# FIG. 1

COMPARATIVE EXAMPLE 1

a.u.

$2\theta$

# FIG. 2

EXAMPLE 4

a.u.

$2\theta$

# FIG. 3

200 nm    WD = 3.0 mm    EHT = 3.00 kV    Aperture Size = 20.00 µm    Mag = 50.00 K X    Signal A = SE2

# FIG. 4

100 nm    WD = 2.9 mm    EHT = 3.00 kV    Aperture Size = 20.00 µm    Mag = 50.00 K X    Signal A = SE2

# FIG. 5

# FIG. 6

## EXAMPLE 4

FIG. 7

**INTERNATIONAL SEARCH REPORT**

International application No.

PCT/JP2021/007470

| A. CLASSIFICATION OF SUBJECT MATTER |
|---|
| B01J 23/78(2006.01)i; B01J 23/46(2006.01)i; B01J 23/58(2006.01)i; C01B 3/04(2006.01)i<br>FI: B01J23/78 M; B01J23/58 M; B01J23/46 301M; C01B3/04 B<br>According to International Patent Classification (IPC) or to both national classification and IPC |

| B. FIELDS SEARCHED |
|---|
| Minimum documentation searched (classification system followed by classification symbols)<br>B01J21/00-38/74; C01B3/04 |
| Documentation searched other than minimum documentation to the extent that such documents are included in the fields searched<br>　　Published examined utility model applications of Japan　　　　　　1922-1996<br>　　Published unexamined utility model applications of Japan　　　　1971-2021<br>　　Registered utility model specifications of Japan　　　　　　　　1996-2021<br>　　Published registered utility model applications of Japan　　　　1994-2021 |
| Electronic data base consulted during the international search (name of data base and, where practicable, search terms used)<br>　Scopus; JSTPlus (JDreamIII); JST7580 (JDreamIII); JSTChina (JDreamIII) |

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 56-070091 A (CHEVRON RESEARCH COMPANY) 11 June 1981 (1981-06-11) claims, example 1 | 1-4<br>5-7 |
| X | JAINE, Jacob. E. and MUCALO, Michael. R., "Synthesis, Characterisation, and catalytic properties of halloysite-supported metal nanoparticles", Mater. Res. Bull., 20 November 2018, vol. 111, pp. 251-258, DOI:10.1016/j.materresbull.2018.11.027, 2.1 Preparation of catalysis, 3. 2 Electron microscopy, Fig. 1 C), F), I), L) | 1, 2, 4 |
| A | JP 57-140646 A (CHEVRON RESEARCH COMPANY) 31 August 1982 (1982-08-31) entire text | 1-7 |
| A | JP 2009-091236 A (GWANGJU INSTITUTE OF SCIENCE AND TECHNOLOGY) 30 April 2009 (2009-04-30) entire text | 1-7 |

☒ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>　　14 April 2021 (14.04.2021) | Date of mailing of the international search report<br>　　27 April 2021 (27.04.2021) |
|---|---|
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

INTERNATIONAL SEARCH REPORT

International application No.

PCT/JP2021/007470

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2019/183215 A2 (UNIVERSITY OF NEW ORLEANS) 26 September 2019 (2019-09-26) entire text | 1-7 |
| A | WO 2019/208646 A1 (JFE MINERAL CO., LTD.) 31 October 2019 (2019-10-31) entire text | 1-7 |

Form PCT/ISA/210 (continuation of second sheet) (January 2015)

**INTERNATIONAL SEARCH REPORT**

Information on patent family members

International application No.

PCT/JP2021/007470

| Patent Documents referred in the Report | Publication Date | Patent Family | Publication Date |
|---|---|---|---|
| JP 56-070091 A | 11 Jun. 1981 | GB 2059283 A claims, example 1 DE 3033963 A FR 2465775 A1 CA 1145285 A | |
| JP 57-140646 A | 31 Aug. 1982 | US 4358400 A the whole document GB 2090766 A DE 3146306 A CA 1168210 A | |
| JP 2009-091236 A | 30 Apr. 2009 | US 2009/0092836 A1 the whole document EP 2045214 A2 KR 10-2009-0034620 A | |
| WO 2019/183215 A2 | 26 Sep. 2019 | (Family: none) | |
| WO 2019/208646 A1 | 31 Oct. 2019 | (Family: none) | |

Form PCT/ISA/210 (patent family annex) (January 2015)

**EP 4 112 164 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017099149 A

- WO 2018079556 A